(19) Europäisches Patentamt

European Patent Office

Office européen des brevets

(11) Veröffentlichungsnummer: **0 011 841**
**B1**

(12) **EUROPÄISCHE PATENTSCHRIFT**

(45) Veröffentlichungstag der Patentschrift: **19.05.82**

(21) Anmeldenummer: **79104689.9**

(22) Anmeldetag: **26.11.79**

(51) Int. Cl.³: **C 04 B 35/56, C 04 B 41/04**

(54) Verfahren und Vorrichtung zur Herstellung von Siliciumcarbid-Formkörpern.

(30) Priorität: **04.12.78 DE 2852410**

(43) Veröffentlichungstag der Anmeldung:
**11.06.80 Patentblatt 80/12**

(45) Bekanntmachung des Hinweises auf die Patenterteilung:
**19.05.82 Patentblatt 82/20**

(84) Benannte Vertragsstaaten:
**BE CH FR GB**

(56) Entgegenhaltungen:
**DE - A - 1 446 978**
**DE - A - 1 671 092**
**DE - A1 - 1 771 408**
**DE - A1 - 2 707 299**
**DE - A1 - 2 718 142**
**US - A - 3 857 744**

(73) Patentinhaber: **Kernforschungsanlage Jülich Gesellschaft mit beschränkter Haftung**
**Postfach 1913**
**D-5170 Jülich (DE)**

(72) Erfinder: **Dias, Francisco Joachim**
**An der Lünette 3**
**D-5170 Jülich (DE)**
Erfinder: **Gupta, Ashok Kumar**
**Artilleriestrasse 49**
**D-5170 Jülich (DE)**
Erfinder: **Gyarmati, Ernö, Dr.**
**Kopernikusstrasse 4**
**D-5170 Jülich (DE)**
Erfinder: **Kampel, Marian**
**Belderweg 9**
**D-5138 Heinsberg-Oberbruch (DE)**
Erfinder: **Luhleich, Hartmut, Dr.**
**Chlodwigplatz 15**
**D-5160 Düren (DE)**
Erfinder: **Münzer, Rudolf**
**Tilsiter Strasse 7**
**D-5110 Alsdorf (DE)**
Erfinder: **Naoumidis, Aristidis, Dr.**
**Kreisbahnstrasse 30**
**D-5170 Jülich-Koslar (DE)**

### Verfahren und Vorrichtung zur Herstellung von
### Siliciumcarbid-Formkörpern

Die Erfindung bezieht sich auf ein Verfahren zur Herstellung von Siliciumcarbid-Formkörper, insbesondere Rohren, bei dem ein Kohlenstoff oder Kohlenstoff und Siliciumcarbid aufweisender poröser Vorkörper bei zumindest etwa 1400 °C in einer Inertgasatmosphäre mit elementarem Silicium imprägniert und einer Siliciumcarbid-Bildungsreaktion unterworfen wird sowie auf eine Vorrichtung zur Durchführung des Verfahrens.

Unter Siliciumcarbid-Formkörpern sollen in diesem Zusammenhang Formkörper verstanden werden, die bis zu einer Tiefe von etwa 7 bis 10 mm von der Oberfläche her gerechnet Siliciumcarbid als einen wesentlichen Bestandteil enthalten oder daraus bestehen. Das heißt, die Umsetzung von im vorgeformten Körper enthaltenem Kohlenstoff mit von außen zutretendem Silicium unter Formerhaltung kann bei Körpern erfolgen, die aus Kohlenstoff oder Kohlenstoff und Siliciumcarbid bestehen oder auch noch weitere, temperaturfeste und gegenüber Siliciumdämpfen inerte Materialien enthalten. Die Umwandlung des enthaltenen Kohlenstoffs in Siliciumcarbid durch über die Poren eintretendes Silicium kann zur Zeit bis in eine Materialtiefe von etwa 7 mm bis 10 mm erreicht werden, so daß Formkörper mit Materialstärken bis zu etwa 20 mm siliziert werden können, während bei größeren Materialstärken ein nicht-umgesetzter Kern verbleibt.

Siliciumcarbid-Formkörper werden zur Zeit entweder durch Heißpressen von entsprechendem Kornmaterial oder nach einem Verfahren hergestellt, bei dem in einem ersten Verfahrensschritt (a) aus Kohlenstoff- oder Kohlenstoff- und Siliciumcarbidpulver ein poröser Formkörper hergestellt wird, der in einem zweiten Verfahrensschritt (b) unter Umwandlung des enthaltenen Kohlenstoffs siliziert wird.

Für die Silizierung gemäß (b) sollte der Vorkörper eine angemessene Porosität aufweisen, wie sie zum Beispiel gemäß einer Verfahrensweise erhalten wird, bei der mit Bindemittel wie Phenolformaldehydharz beschichtete Kornmaterialien mit einer Korngröße um etwa 50 $\mu$m bis 100 $\mu$m in einer Form (insbesondere unter Vibration derselben zur Vermeidung von Hohlräumen) unter dem Einfluß von auf das Bindemittel anquellend (wie zum Beispiel Methanol) oder reaktiv (wie zum Beispiel Formaldehyd) wirkenden Dämpfen im wesentlichen ohne Druckanwendung zu einem zusammenhängenden Körper geformt werden, der dann "getrocknet" und einer Verkokungsbehandlung zur Umwandlung beziehungsweise Beseitigung des Bindemittels unterworfen wird. Eine solche Verfahrensweise ist etwa den deutschen Patentschriften 2 133 044 oder 2 360 982 der Anmelderin zu entnehmen.

Diese durch den Verfahrensschritt (a) erhaltenen kohlenstoffhaltigen porösen Körper werden bekanntermaßen in einer siliciumhaltigen Atmosphäre entweder bei Normaldruck und einer Temperatur von etwa 2000 °C oder bei Unterdruck von üblicherweise 0,5 mbar und einer Temperatur zwischen 1500 °C und 1700 °C siliziert (siehe britische Patentschrift 866 813 sowie "Powder Metallurgy" 8 (1961) 113 ff.).

Gemäß der DE—A—2 239 971 erfolgt die Herstellung von graphithaltigen Siliciumcarbidkörpern, die als Antifriktionsmaterialien verwendet werden sollen, durch Imprägnierung der porösen Vorkörper aus Graphit mit flüssigem Silicium bei 1700 bis 2050 °C, indem die Körper in eine Siliciumschmelze getaucht werden.

Nach einem weiteren, nicht näher spezifizierten Verfahren gemäß der DE—A—2 256 326 soll ein poröser Vorkörper aus $\alpha$-Siliciumcarbid und Graphit in Gegenwart von elementarem Silicium im Vakuum oder in einer Inertgasatmosphäre auf etwa 1400 °C erhitzt und so durch schmelzendes und in die Poren eindringendes Silicium ein aus $\alpha$- und $\beta$-Siliciumcarbid mit geringen Anteilen an elementarem Silicium bestehender Formkörper erhalten werden. Der Unterschied dieses Verfahrens gegenüber der Verfahrensweise gemäß der vorstehend zitierten DE—A—2 239 971 scheint darin zu bestehen, daß gemäß der DE—A—2 256 326 im porösen Vorkörper weniger Graphit enthalten ist, bei niedrigeren Temperaturen siliciert wird und eine gemeinsame Aufheizung von Vorkörper und Silicium erfolgt, während nach der DE—A—2 239 971 ein schmelzflüssiges Siliciumtauchbad vorgegeben wird, in das der poröse Vorkörper eingebracht wird.

Diese bekannten Verfahren der Umwandlung graphithaltiger poröser Vorkörper durch eindringende Si-Schmelze in Siliciumcarbid-Formkörper werden nun gemäß der Erfindung dadurch verbessert, daß der auf 1400 °C bis 1500 °C erhitzte Vorkörper durch Aufstreuen von Siliciumpulver in einer ersten Stufe imprägniert beziehungsweise beschichtet und dann in einer zweiten Stufe einer die Umsetzung bewirkenden Glühbehandlung zwischen 1800 und 2000 °C unterworfen wird.

Vorzugsweise wird der zu imprägnierende Vorkörper während des Aufstreuens gedreht.

Die gemäß der Erfindung in einer ersten Stufe durch Aufstreuen von Siliciumpulver vorgenommene Imprägnierung beziehungsweise Beschichtung ermöglicht eine gesteuerte Auftragung der für die Siliciumcarbidbildung notwendigen Materialmenge, wobei eine durchgreifende Füllung der Poren durch zeitlich gedehnte Auftragung kleiner Materialmengen bei Temperaturen, die eine umfassendere Umsetzung zum Siliciumcarbid und damit Störung des Imprägnierungsvorganges noch nicht zulassen, erreicht werden kann. Erst nach erfolgter Imprägnierung wird der auf diese Weise vorimprägnierte Vorkörper auf Temperaturen erhitzt, die eine relativ rasche Durchreaktion ermöglichen.

Diese erfindungsgemäße Siliciumzugabe durch Aufstreuen von Pulver hat ferner den außerordentlichen Vorteil, daß kein Behältnis (üblicherweise Graphittiegel) für geschmolzenes Silicium benötigt wird. Bekanntermaßen müssen die üblicherweise angewandten Graphittiegel relativ häufig ersetzt werden, wenn nicht eine Schädigung der Gesamtapparatur durch (aus einem schadhaften Tiegel) ausfließendes Silicium in Kauf genommen werden soll.

Durch die erfindungsgemäße Arbeitstechnik und Anwendung einer Inertgasatmosphäre wird eine kontinuierliche Produktion ohne weiteres möglich, die den bislang geübten Verfahren weit überlegen ist.

Ein besonderer Vorzug des erfindungsgemäßen Verfahrens besteht in der Möglichkeit, die beiden Silizierungsstufen kontinuierlich in unterschiedlichen Zonen eines Heizofens durchzuführen. Besonders zweckmäßig sind induktiv beheizte Ofenzonen, deren jeweilige Breiten den jeweiligen Erhitzungszeiten angepaßt werden.

Die in einer Inertgasatmosphäre und insbesondere in Argon vorgenommene Beschichtung mit Silicium erfolgt relativ rasch, etwa mit einer Vorschubgeschwindigkeit von 3 cm/min, während für die Hochtemperaturumsetzung bei etwa 2000 °C Durchlaufzeiten von rund 20 Minuten angemessen sind.

Zweckmäßigerweise werden die Vorkörper durch Aufstreuen von Siliciumpulver mit einer Korngröße bis zu etwa 100 μm und insbesondere von 10 μm bis 50 μm in Reinstargon von 1 Bar derart beschichtet, daß eine etwas überstöchiometrische Menge Silicium (bezogen auf die Umsetzung des freien Kohlenstoffs in Siliciumcarbid) vorhanden ist. Dabei können die zu beschichtenden porösen Vorkörper zur Erzielung einer möglichst gleichmäßigen Verteilung etwa mit 15 Upm bis 60 Upm gedreht werden.

Bei rohrförmigen Körpern kann das Pulver in das um etwa 30 ° gegen die Horizontale geneigte, gedrehte Rohr bestreut werden. Diese Verfahrensweise eignet sich für Rohrlängen bis zu etwa 20 cm.

Gemäß der Erfindung werden aus Vorkörpern mit einer Dichte von etwa 0,7 bis 1,45 g/cm³, insbesondere 0,9 bis 1,2 g/cm³, die eine Gesamtporosität von etwa 45 bis 65 % bei einem Verhältnis von offener Porosität zur Gesamtporosität von etwa 0,7 bis 1 aufweisen, fertige Formkörper mit einer Dichte von etwa 3,00 bis 3,14 g/cm³ erzeugt, die günstige Festigkeitseigenschaften besitzen.

Dieses Ergebnis wird im Vergleich zum Stand der Technik durch eine relativ rasche Arbeitsweise und insbesondere in kontinuierlicher Arbeitsweise erreicht, für die sich eine Quarzapparatur der in der angefügten Zeichnung skizzierten Art bewährt hat.

Gemäß dieser Figur ist ein Vorkörper 1 aus porösem Kohlenstoff- oder Kohlenstoff/Siliciumcarbid-Material in einem durch die Induktionsspule 2 beheizten Ofen 3 drehbar gelagert, der am Eingang oder insbesondere am oberen Ende einen Einfülltrichter 4 für pulverförmiges Silicium 5 mit einer Dosiervorrichtung 6 aufweist. Dieses Pulver fällt auf den gedrehten Vorkörper 1 in der ersten Heizzone und verteilt sich dabei gleichmäßig über die Körperoberflächen. Bei waagerechter Ofenlagerung wird das Pulver am Ofeneingang zugeführt: Besonders zweckmäßig ist jedoch die gezeigte Anordnung mit geneigtem Ofen (und Vorkörper) und vom oberen Ende her in die erste Heizzone fallendem Pulver.

In der nachfolgenden Heizzone 7 des Hochtemperaturofens 8 mit Heizelement 9 wird der so beschichtete Körper 1 auf etwa 1800 bis etwa 2000 °C erhitzt, bei welchen Temperaturen eine verhältnismäßig rasche Umsetzung des aufgebrachten Siliciums mit dem enthaltenen Kohlenstoff erfolgt.

Die Ofenzonen beziehungsweise Öfen 3 und 7 werden durch ein Verbindungsstück 10 verbunden und gemeinsam mit bei 11 zutretendem Argon gespült. Der untere Beschichtungsofen wird im wesentlichen durch ein doppelwandiges Quarzglasrohr 12 mit Wasserkühlung gebildet. Rotation und Vorschub der Probe werden mittels einer Dreh- und Schiebevorrichtung 13 bewerkstelligt. Graphit-Abstandshalter 14 dienen der zusätzlichen Unterstützung der relativ langen Probe. Der Hochtemperaturofen 8 ist durch eine thermische Isolierung 15 gegen die Umgebung abgeschirmt.

Die vorstehend skizzierte Silizierung erfolgt in einer Inertgasatmosphäre. Am einfachsten läßt sich der Ofenbetrieb mit einer Reinstargonspülung bei 1 Bar realisieren, wobei der Einstreuteil zur Umgebung hin offen sein kann. Durch einen geringfügigen Argonüberdruck läßt sich der Zutritt reaktiver Gase von außen verhindern und gleichzeitig wird durch das Ausströmen geringer Argonmengen eine gewisse Auflockerung des "Streuguts" erreicht.

Man kann das Siliciumpulver jedoch auch in einen in den gesamten Ofenbereich mit einbezogenen Raum bringen (in dem die gleiche Inertatmosphäre herrscht wie im Ofen) und von dort her dosiert auf den zu beschichtenden Vorkörper aufbringen.

Eine leichte Vibration im Pulvereinlaufbereich kann zur Verhinderung eines ungleichmäßigen Pulverauftrags nützlich sein.

Nachfolgend wird die Erfindung anhand von Beispielen weiter erläutert:

Beispiel 1

Ein Kohlenstoffstab ($\rho_g = 1$ gcm⁻³) mit einer Länge von 15 cm und einem Durchmesser von 2 cm wurde rotierend in schräger Lage (≈30 °)

durch einen Induktionsofen mit Argon-Spülung geführt. Bei einer Vorschubgeschwindigkeit von 3 cm/Min und bei einer Temperatur von 1500 °C wurde der Stab mit Si-Pulver gleichmäßig bestreut und eine für die weitgehende Umsetzung des Kohlenstoffs zu Siliciumcarbid erforderliche Siliciummenge aufgebracht.

In einem fest angeschlossenen zweiten Induktionsofen, dessen Suszeptor sich auf 2000 °C befand, wurde der Stab kontinuierlich weiterbehandelt. Nach einer Durchlaufzeit von 20 Minuten wurde ein SiC-Stab mit einer Dichte von 3,05 g/cm$^{-3}$ erhalten.

Beispiel 2

Ein Kohlenstoffrohr ($\rho_g = 1$ gcm$^{-3}$) mit einer Länge von 15 cm, einem Außendurchmesser von 2 cm und einer Wanddicke von 0,5 cm wurde, wie im Beispiel 1 angegeben ist, durch den ersten Induktionsofen geführt. Über zwei ebenfalls aus Graphit bestehende Anschlußstutzen an den beiden Enden des Kohlenstoffrohres wurde Spülargon beziehungsweise Si-Pulver zur Beschichtung der Innenwand zugeführt. Auf diese Weise wurde in 10 Min. ein Kohlenstoffrohr mit einer gleichmäßigen Siliciumbeschichtung der Innenwand erhalten.

In einem getrennten Arbeitsgang wurde das Rohr, wie im Beispiel 1 angegeben ist, in den zweiten Induktionsofen geführt. Die Durchlaufzeit betrug hier 15 Minuten. Das auf diese Weise erhaltene Rohrmaterial hatte eine Dichte von 3,10 gcm$^{-3}$.

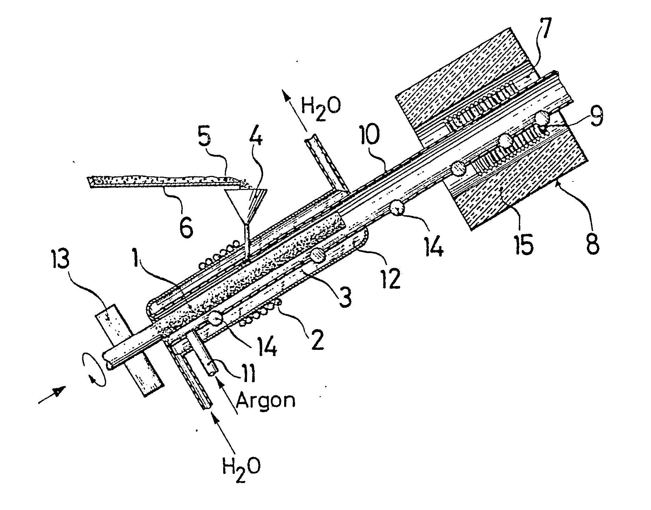

Patentansprüche

1. Verfahren zur Herstellung von Siliciumcarbid-Formkörpern, insbesondere Rohren, bei dem ein Kohlenstoff oder Kohlenstoff und Siliciumcarbid aufweisender poröser Vorkörper bei zumindest 1400 °C in einer Inertgasatmosphäre mit elementarem Silicium imprägniert und einer Siliciumcarbid-Bildungsreaktion unterworfen wird, dadurch gekennzeichnet, daß der auf 1400 °C bis 1500 °C erhitzte Vorkörper durch Aufstreuen von Siliciumpulver in einer ersten Stufe imprägniert beziehungsweise beschichtet und dann in einer zweiten Stufe einer die Umsetzung bewirkenden Glühbehandlung zwischen 1800 und 2000 °C unterworfen wird.

2. Verfahren nach Anspruch 1, dadurch gekennzeichnet, daß der zu imprägnierende Vorkörper während des Aufstreuens gedreht wird.

3. Verfahren nach Anspruch 1 oder 2, gekennzeichnet durch die Imprägnierung von rohrförmigen Vorkörpern, indem das Pulver in das um etwa 30 ° gegen die Horizontale geneigte, um seine Achse rotierende Rohr gestreut wird.

4. Verfahren nach einem der vorangehenden Ansprüche, dadurch gekennzeichnet, daß Siliciumpulver mit Korngröße im Bereich von 10 bis 50 $\mu$m verwendet wird.

5. Verfahren nach einem der vorangehenden Ansprüche, dadurch gekennzeichnet, daß der poröse Vorkörper aus Kohlenstoff besteht.

6. Verfahren nach einem der vorangehenden Ansprüche, dadurch gekennzeichnet, daß ein Vorkörper mit einer gleichmäßigen, offenen Porosität und einer Dichte von 0,9 bis 1,2 g/cm$^3$ verwendet wird.

7. Verfahren nach einem der vorangehenden Ansprüche, dadurch gekennzeichnet, daß der Vorkörper mit einer Siliciummenge bestreut wird, die der für die Umsetzung des im Körper enthaltenen freien Kohlenstoffs zu Siliciumcarbid erforderlichen Menge zumindest entspricht.

8. Verfahren nach einem der vorangehenden Ansprüche, dadurch gekennzeichnet, daß die Imprägnierung (1) und Umsetzung (2) aufeinanderfolgend in zwei unterschiedlichen Heizzonen eines Ofens, insbesondere eines Induktionsofens, durchgeführt werden.

9. Verfahren nach Anspruch 8, dadurch gekennzeichnet, daß längere Körper kontinuierlich in einem ersten Ofenbereich zonenweise erhitzt und mit Siliciumpulver bestreut und in einem zweiten Ofenbereich zonenweise nacherhitzt werden, wobei die Breite der ersten und der zweiten Heizzone der jeweiligen Erhitzungsdauer angepaßt ist.

10. Vorrichtung zur Durchführung des Verfahrens nach einem der vorangehenden Ansprüche, gekennzeichnet durch zwei Öfen oder Ofenzonen (3, 7) mit gesondert steuerbarer Beheizung (2, 9); Einrichtungen (13, 14) zur Lagerung und Rotation sowie gegebenenfalls Axialbewegung von Vorkörpern im Ofen; eine Siliciumpulverzufuhr (4, 6) am Eingang oder insbesondere oberen Ende des 1. Ofens und gegebenenfalls eine Argonspülung für die erste und/oder zweite Ofenzone.

Claims

1. Process for the manufacture of shaped objects of silicon carbide, in particular tubes, in which a porous blank, containing carbon or carbon and silicon carbide, is impregnated at a temperature of at least 1,400°C in an inert gas atmosphere with elementary silicon and is subjected to a reaction forming silicon carbide, characterised in that the blank heated to 1,400°C to 1,500°C is impregnated or coated in a first stage by sprinkling with silicon powder and is then subjected, in a second stage, to a calcination treatment, which effects the reaction, between 1,800 and 2,000°C.

2. Process according to Claim 1, characterised in that the blank to be impregnated is rotated during the sprinkling.

3. Process according to Claim 1 or 2, characterised by the impregnation of tubular blanks by sprinkling the powder into the tube inclined by about 30° to the horizontal and rotating about its axis.

4. Process according to one of the preceding claims, characterised in that silicon powder having a grain size in the range from 10 to

50 μm is used.

5. Process according to one of the preceding claims, characterised in that the porous blank consists of carbon.

6. Process according to one of the preceding claims, characterised in that a blank having a uniform open porosity and a density of 0.9 to 1.2 g/cm³ is used.

7. Process according to one of the preceding claims, characterised in that the blank is sprinkled with a quantity of silicon which at least corresponds to the quantity required for the reaction of the free carbon contained in the blank, to give silicon carbide.

8. Process according to one of the preceding claims, characterised in that the impregnation (1) and the reaction (2) are carried out one after the other in two different heating zones of one furnace, in particular an induction furnace.

9. Process according to Claim 8, characterised in that elongated blanks are continuously heated zone by zone in a first furnace region and sprinkled with silicon powder, and are heated again zone by zone in a second furnace region, the width of the first and second heating zones being adapted to the particular duration of heating.

10. Equipment for carrying out the process according to one of the preceding claims, characterised by two furnaces or furnace zones (3, 7) with separately controllable heating (2, 9), devices (13, 14) for the mounting and rotation and, if appropriate, axial movement of blanks in the furnace, a silicon powder supply (4, 6) at the inlet or, in particular, the upper end of the 1st furnace and, if appropriate, argon blanketing for the first and/or second furnace zone.

**Revendications**

1. Procédé de fabrication de corps moulés ou formé en carbure de silicium, notamment de tubes, suivant lequel on imprègne de silicium élémentaire, en opérant au moins à 1400°C dans une atmosphère de gaz inerte, une ébauche poreuse contenant du carbone ou du carbone et du carbure de silicium, et on la soumet à une réaction de formation de carbure de silicium, caractérisé en ce qu'il consiste à imprégner ou à revêtir en un premier stade l'ébauche chauffée jusqu'à 1400°C à 1500°C, en la saupoudrant de silicium puis, en un second stade, à la soumettre à un traitement de recuit entre 1800 et 2000°C provoquant la réaction.

2. Procédé suivant la revendication 1, caractérisé en ce qu'il consiste à faire tourner l'ébauche à imprégner pendant le saupoudrage.

3. Procédé suivant la revendication 1 ou 2, caractérisé par l'imprégnation d'ébauches tubulaires en répandant la poudre dans le tube tournant autour de son axe incliné de 30° environ par rapport à l'horizontale.

4. Procédé suivant l'une des revendications précédentes, caractérisé en ce qu'il consiste à utiliser de la poudre de silicium ayant une granulométrie allant de 10 à 50 microns.

5. Procédé suivant l'une des revendications précédentes, caractérisé en ce que l'ébauche poreuse est en carbone.

6. Procédé suivant l'une des revendications précédentes, caractérisé en ce qu'il consiste à utiliser une ébauche ayant une porosité ouverte uniforme et une masse volumique de 0,9 à 1,2 gramme/cm³.

7. Procédé suivant l'une des revendications précédentes, caractérisé en ce qu'il consiste à répandre sur l'ébauche une quantité de silicium qui correspond au moins à la quantité nécessaire à la transformation en carbure de silicium du carbone libre contenu dans l'ébauche.

8. Procédé suivant l'une des revendications précédentes, caractérisé en ce qu'il consiste à effectuer l'imprégnation (1) et la réaction (2) successivement dans deux zones différentes de chauffage d'un four, notamment d'un four à induction.

9. Procédé suivant la revendication 8, caractérisé en ce qu'il consiste à chauffer par zone et à saupoudrer de silicium en continu des corps assez long dans une première région du four, et dans une seconde région de celui-ci, à les réchauffer encore par zone, les largeurs de la première et de la seconde régions de chauffage étant adaptées à leur durée de chauffage respectivement exigée.

10. Installation pour exécuter le procédé suivant l'une des revendications précédentes, caractérisé par deux fours ou deux zones (3, 7) de four, à chauffage (2, 9) pouvant être commandé; par des dispositifs (13, 14) pour mettre en place des ébauches dans le four et pour les faire tourner et, le cas échéant, pour les déplacer suivant l'axe; par une amenée (4, 6) de poudre de silicium à l'entrée ou notamment à l'extrémité supérieure du premier four et, le cas échéant, par un balayage à l'argon pour la première et/ou pour la seconde région du four.